# EUROPEAN PATENT APPLICATION

(11) **EP 4 531 389 A1**
(43) Date of publication of application: **02.04.2025**
(21) Application number: 24201521.2
(22) Date of filing: 20.09.2024
(51) Int. Cl.: H04N 1/60

(54) **IMAGE PROCESSING APPARATUS, IMAGE PROCESSING METHOD, AND IMAGE PROCESSING PROGRAM**

(30) Priority: 27.09.2023 JP 2023164643; 27.09.2023 JP 2023164644
(71) Applicant: RISO KAGAKU CORPORATION, Tokyo 108-8385 (JP)
(72) Inventor: KUDO, Kenji, Tokyo, 108-8385 (JP); MASUDA, Shuta, Tokyo, 108-8385 (JP); OKADA, Yoshiyuki, Tokyo, 108-8385 (JP)
(74) Representative: Winter, Brandl - Partnerschaft mbB

(57) **Abstract**

A system is equipped with a classifying unit (11) that obtains image data and classifies the types of objects which are included in the image data, and an image processing unit (12) that administers an image process on the image data according to the types of objects classified by the classifying unit (11) and color information of a print medium on which the image data is to be printed.

## Description

### Technical Field

The present invention is related to an image processing apparatus, an image processing method, and an image processing program that administer image processes on image data to be printed on print media.

### Background Art

Generally, white paper is presumed to be a target of printing for printing image data. Therefore, when printing on a print medium with a color different from that of white paper, there were cases in which a desired tint could not be realized.

Therefore, Patent Document 1 proposes a method for detecting the color of a print medium and perform a masking process based on the detected color information, thereby conserving an amount of toner which is employed and matching the tint of a printed image. The masking process is a process that reduces the value of a yellow component by "15" from the image data in the case that the print medium, such as corrugated cardboard for example, has a color corresponding to "15" of the yellow component.

In the case that image data containing a photograph of a red apple as an object is printed on corrugated cardboard, for example, more favorable reproduction becomes possible if a masking process that subtracts the yellow component which is the color of the print medium from that image data, is performed.

### [Background Art Documents]

### [Patent Documents]

[Patent Document 1]
Japanese Unexamined Patent Publication No. H9-270932

### Summary

### [Technical Problem]

However, depending on the color of a print medium and the type (shape and tint) of the object in the image data, the masking process described above may have diminished effect or result in the object being insufficiently visible.

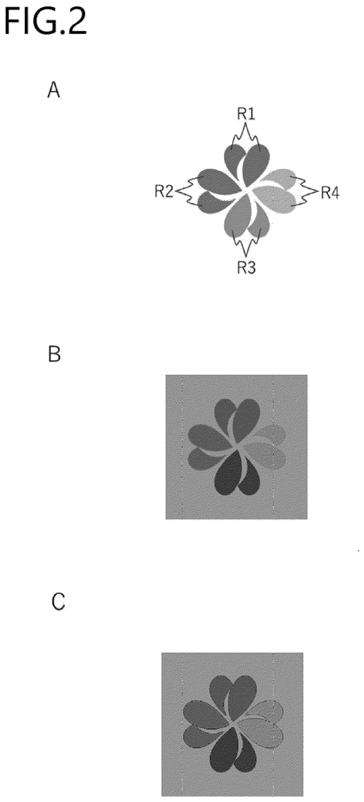

In the case that image data containing a logo as illustrated in Figure 2A is printed as an object on a print medium such as corrugated cardboard having a yellow component, for example, the visibility of shapes in areas with close tint differences from the color of the print medium may be poor, as illustrated in Figure 2B.

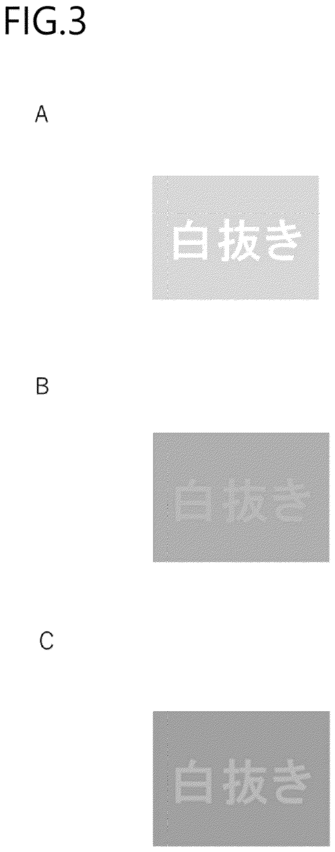

In addition, in the case that image data containing open text " 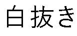 " as illustrated in Figure 3a is printed on a print medium such as corrugated cardboard, the visibility of the open text may be poor, as illustrated in Figure 3b.

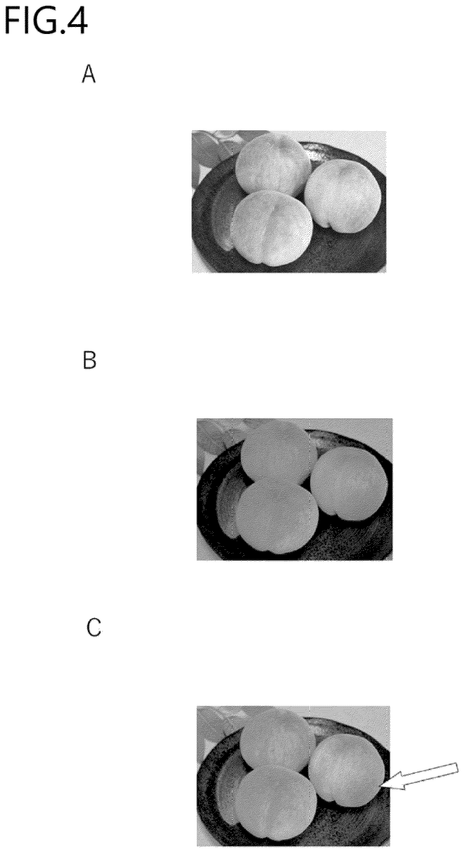

Further, in the case that image data containing photographic objects with no yellow component is printed, for example, a photograph of a pink peach as illustrated in Figure 4a, the reduction of the yellow component due to the masking process may cause the peach to appear like an apricot as illustrated in Figure 4b, resulting in misidentification of the object.

In the case that there are different types of objects in the image data as described above, it is not appropriate to uniformly administer the same process for each object because the properties of each object are different, and visibility may not necessarily be improved.

The present invention has been developed in view of the foregoing circumstances. It is an object of the present invention to provide an image processing apparatus, an image processing method, and an image processing program that can improve the visibility of various objects which are included in image data in the case that the image data is printed on a print medium.

### [Solution to the Problem]

An image processing apparatus of the present invention is equipped with a classifying unit that acquires image data and classifies the types of objects which are included in the image data, and an image processing unit that administers an image process on the image data according to the types of objects classified by the classifying unit and color information of a print medium on which the image data is to be printed.

### [Advantageous Effects of the Invention]

According to the image processing apparatus of the present invention, the types of objects which are included in image data are classified, and an image process is administered on the image data according to the classified types of objects and color information of the print medium on which the image data is to be printed. Therefore, the visibility of various objects which are included in the image data can be improved in the case that the image data is printed on a print medium.

### Brief Description of the Drawings

Figure 1 is a block diagram that illustrates the schematic configuration of a printing system that employs a first embodiment of the image processing apparatus of the present invention.
Figure 2 is a collection of diagrams that illustrate a case in which an object is a logo.
Figure 3 is a collection of diagrams that illustrate a case in which an object is open (blank) text.
Figure 4 is a is a collection of diagrams that illustrate a case in which an object is a photograph.
Figure 5 is a flowchart for explaining the flow of processes performed by the image processing apparatus of the first embodiment.
Figure 6 is a schematic diagram that illustrates a printing apparatus of the printing system illustrated in Figure 1.
Figure 7 is a collection of diagrams that illustrate an example of image data in which an object is a photograph of a supermarket flyer printed on a print medium.
Figure 8 is a block diagram that illustrates the schematic configuration of a printing system of a second embodiment.
Figure 9 is a collection of diagrams that illustrate the results of a gray scale process, a gradation binarization process, and an abstraction process administered on image data that includes a photograph of a peach as an object.
Figure 10 is a flowchart for explaining the flow of processes performed by the printing system of the second embodiment.

### [Embodiments of the Invention]

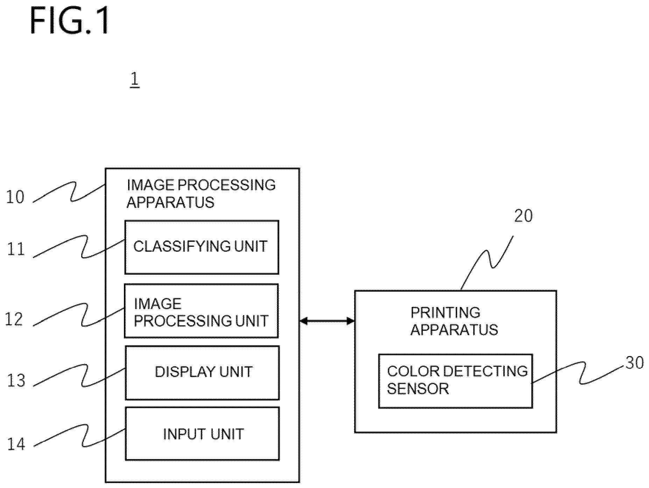

Hereinafter, a printing system 1 that employs an image processing apparatus according to a first embodiment of the present invention will be described in detail with reference to the attached drawings. Figure 1 is a block diagram that illustrates the schematic configuration of the printing system 1 of the present embodiment.

The printing system 1 of the present embodiment is equipped with an image processing apparatus 10 and a printing apparatus 20. The image processing apparatus 10 and the printing apparatus 20 are connected via wireless or wired communication lines and are configured to be capable of communicating with each other.

In the printing system 1 of the present embodiment, the image processing apparatus 10 classifies the types of objects which are included in the image data and administers an image process on the image data according to the types of objects. Then, the printing apparatus 20 performs a printing process based on the image processed image data. Particularly, the printing system 1 of the present embodiment administers a printing process on the surface of corrugated cardboard, and administers an image process on the image data taking color information of the surface of the corrugated cardboard into consideration.

As illustrated in Figure 1, the image processing apparatus 10 is equipped with a classifying unit 11, an image processing unit 12, a display unit 13, and an input unit 14.

The classifying unit 11 acquires image data to be printed and classifies the types of objects which are included in the image data. The classifying unit 11 identifies objects which are included in the image data and classifies the type of identified objects (logo, open text, or photo).

A logo consists of text characters, marks, or a combination of text characters and marks.

Open text is a character modification in which the background of text characters is cross hatched or solid, and the interiors of the text characters are blanked out. In the case that open text is printed, the interiors of the text characters are not printed, but become the base color of a print medium.

Specifically, the classifying unit 11 generates print image data for classifying objects that simulates a case in which image data is printed on a sheet of white paper, identifies objects in the print image data for classifying objects, and classifies objects.

Object identification and classification are performed, for example, by generating a machine learned model by machine learning printed image data of logos, open text, or photographs in advance, and inputting print image data for classifying objects to the machine learned model. A convolutional neural network (CNN) may be employed as a machine learning method, for example. However, the present invention is not limited to such a configuration, and any other known method may be employed.

In addition, the method of object identification and classification is not limited to the method using machine learned models described above, but may also be performed by adding an identifier indicating the type of object to the image data and recognizing the identifier, for example.

The classifying unit 11 of the present embodiment generates print image data for judging visibility, which simulates a case in which image data is printed on a print medium, and employs the print image data for judging visibility to judge the degree of visibility. A case in which image data is printed on a print medium refers to a case in which image data is printed on a colored print medium, such as corrugated cardboard, craft bags, wood, and colored paper, and is a case in which the color of the print medium is added to the color of the image data. Note that when generating the print image data for judging visibility, color conversion suited for the print medium (subtracting the color of the print medium from the image data, for example) may be performed. The color of the print medium may be detected by a color detecting sensor 30 provided in the printing apparatus 20, for example, or the user may input a setting using the input unit 14.

Specifically, the classifying unit 11 calculates a difference in brightness or a difference in hue between a background and an object in the print image data for judging visibility, and judges that visibility is poor if these are below a preset brightness difference threshold value or a hue difference threshold value, and judges that visibility is good if the difference in brightness or the difference in hue is greater than the brightness difference threshold value or the tint difference threshold value.

Note that in the present embodiment, the classifying unit 11 judges the degree of visibility. However, the present invention is not limited to such a configuration, and the print image data for judging visibility may be displayed by the display unit 13, and a user may judge whether the degree of visibility is good or poor, and input the result of judgment by employing the input unit 14.

The image processing unit 12 administers an image process on the image data according to the types of objects included in the image data and the color information of the print medium in the case that the classifying unit 11 judges that the visibility is poor.

Specifically, in the case that the type of object in the image data is a logo, the image processing unit 12 administers a border process on the image data that adds a border to the logo.

A case in which a logo such as that illustrated in Figure 2A. for example, is included in the image data will be described. The logo illustrated in Figure 2A has an area R1 in a reddish color, an area R2 in a greenish color, an area R3 in a blueish color, and an area R4 in a yellowish color. Figure 2B illustrates an example of the logo illustrated in Figure 2A printed on a print medium with a yellowish color. As illustrated in Figure 2B, the color of area R4 of the logo and the color of the print medium are similar, causing it to be difficult to distinguish the boundary between the logo and the background. As a result, the visibility of the logo becomes poor.

Therefore, in order to avoid changing the tint and shape of the logo which is included in the image data as much as possible, the image processing unit 12 changes the tint of the boundary portion of the logo such that a boundary between the logo and the background becomes visible. Specifically, a border is added to the logo which is included in the image data by administering a border process, as illustrated in Figure 2C. The color of the border can be a predetermined color (e.g., gray or black), but it is desirable for the color of the border to be determined based on the color information of colors which are included in the logo and the color information of the print medium.

Specifically, for areas where a color difference (color distance) between the RGB values of the print medium and the RGB values of the logo is smaller than a preset threshold value range, the image processing unit 12 sets the color of the border portion to be an average of the RGB values of the print medium and the RGB values of the logo. However, if the visibility of the border portion is poor with such a color, the color of the border portion is set to be that color with a higher density or that color with a lower brightness. Thereby, the border portion becomes visible while reducing a sense of chromatic incongruity. A border may be added only to an area where the color difference is smaller than the threshold range as described above (the area R4 illustrated in Figure 2A, for example), or the border may be added to all of the edges of the logo, as illustrated in Figure 2C.

The image processing apparatus 12 may also use a higher density color for the logo.

The RGB values of the print medium may, for example, be detected by the color detecting sensor 30 provided in the printing apparatus 20, and the image processing unit 12 may acquire the detected color information. Alternatively, a user may employ the input unit 14 to set and input the color information of the print medium.

In the case that the type of object in the image data is open text, the image processing unit 12 administers a color conversion process on the image data based on the color information of the print medium and the background of the open text.

Figure 3A illustrates an example of image data that includes open text " 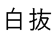 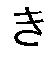 ". The image data illustrated in Figure 3A is image data in which the background of the open text is a yellowish color. Figure 3B illustrates an example of image data that includes open text illustrated in Figure 3A printed on a print medium having a yellowish color. As illustrated in Figure 3B, the color of the background of the image data and the color of the print medium are similar. Therefore, it becomes difficult to distinguish the boundary between the text and the background, resulting in poor visibility of the text.

Because the text portion is generally a thin area, changing only the edges or changing only the color of the text will cause a sense of incongruity from the original image data. Therefore, the image processing unit 12 of the present embodiment administers a color conversion process to increase a difference in hue or a difference in brightness relative to the color of the print medium for both the text portion and the background portion. Figure 3C illustrates an example of a case in which the color conversion process is administered on the image data illustrated in Figure 3A, and then the color converted image data is printed on a yellowish print medium. As illustrated in Figure 3C, it can be understood that the visibility of the text portion is improved compared to Figure 3B.

In addition, the image processing unit 12 administers a contrast increasing process that increases contrast on image data in the case that the type of object in the image data is a photograph.

Figure 4A illustrates an example of image data that includes a photograph of a peach as an object. Figure 4B illustrates an example of the image data that includes a picture of a peach illustrated in Figure 4A from which the color of the print medium (a yellowish color) is subtracted. As illustrated in Figure 4B, the difference in brightness within the peach becomes smaller. Therefore, the peach appears to be an apricot, and the visibility of the peach becomes poor.

Therefore, the image processing unit 12 of the present embodiment administers the contrast increasing process on the image data such that the contrast is emphasized in the peach. Figure 4C illustrates an example of a case in which the color of the print medium (a yellowish color) is subtracted from the image data illustrated in Figure 4A, the contrast increasing process is administered on the image data, and then the processed image data is printed on the yellowish colored print medium. As shown by the portion of Figure 4C indicated by the arrow, the fruit in the printed result appears to be a peach.

The display unit 13 is equipped with a display device such as a liquid crystal display and displays image data to be printed and print image data for judging visibility described above.

The input unit 14 is equipped with input devices such as a mouse and a keyboard, and accepts setting input of color information of a print medium and setting input of the results of judgment of visibility of print image data for judging visibility described above.

The image processing apparatus 10 is equipped with a CPU (Central Processing Unit), semiconductor memory such as a ROM (Read Only Memory) and a RAM (Random Access Memory), a storage such as a hard disk, a communication I/F (interface), etc.

An embodiment of an image processing program of the present invention is installed in the storage of the image processing apparatus 10. The functions of the components of the image processing apparatus 10 described above are executed by this image processing program being launched by the CPU provided in the image processing apparatus 10.

In addition, in the present embodiment, the image processing program is executed by the CPU to realize the functions of each of the components described above. Alternatively, some or all of the functions performed by the image processing program may be performed by hardware such as an ASIC (Application Specific Integrated Circuit), an FPGA (Field-Programmable Gate Array), or other electrical circuits.

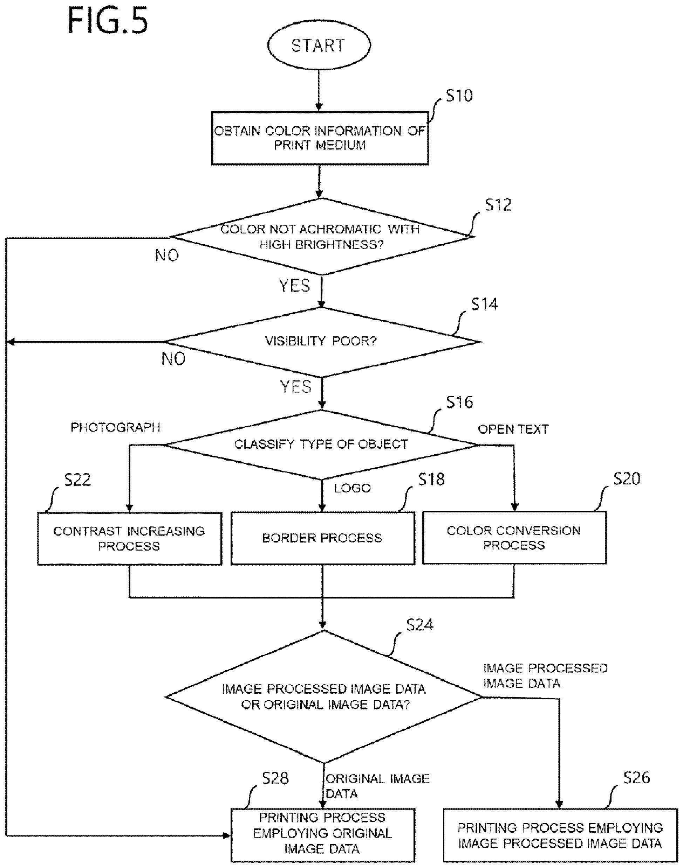

Next, the flow of processes which are performed by the first embodiment of the image processing apparatus 10 will be explained with reference to the flowchart illustrated in Figure 5.

First, color information of a print medium detected by the color detecting sensor 30 provided in the printing apparatus 20 is obtained (S10).

If the color information of the print medium obtained in S10 is an achromatic color with a high brightness (S12, NO), that is, a color close to white, then a printing process is performed using the image data without administering an image process such as those described above on the image data (S28).

In contrast, if the color information of the print medium obtained in S10 is a color other than an achromatic color with high brightness (S12, YES), the classifying unit 11 generates a print image data for judging visibility described above, and judges whether the visibility is good (S14) using the print image data for judging visibility. In the case that the classifying unit 11 judges that the visibility is good (S 14, NO), a print process is performed using the image data without administering an image process such as those described above on the image data (S28).

In contrast, if the classifying unit 11 judges that visibility is poor (S14, YES), the classifying unit 11 generates the print image data for classifying objects described above, identifies objects in the print image data for classifying objects, and classifies the objects (S16).

Then, the image processing unit 12 an administers an image process on the image data according to the type of object and the color information of the print medium. Specifically, in the case that the type of object is a logo (S16, logo), the border process is administered on the image data as described above (S 18). In the case that the type of object is open text (S16, open text), the color conversion process is administered on the image data as described above (S20). In the case that the type of object is a photograph (S16, Photograph), the contrast increasing process is administered on the image data as described above (S22).

The display unit 13 then displays printout results for cases in which the image data that underwent the image process and the original image data prior to the image process being administered are printed on the print medium, respectively.

Next, the input unit 14 accepts the ultimate selection of a user regarding which of the image data that underwent the image process and the original image data prior to the image process being administered is to be printed (S24).

In the case that the user selects printing of the image data that underwent the image process (S24, processed image data), a printing process is performed based on the processed image data by the printing apparatus 20 (S26). In contrast, in the case that the user selects printing of the original image data prior to the image process being administered (S24, original image data), a printing process is performed based on the original image data by the printing apparatus 20 (S28).

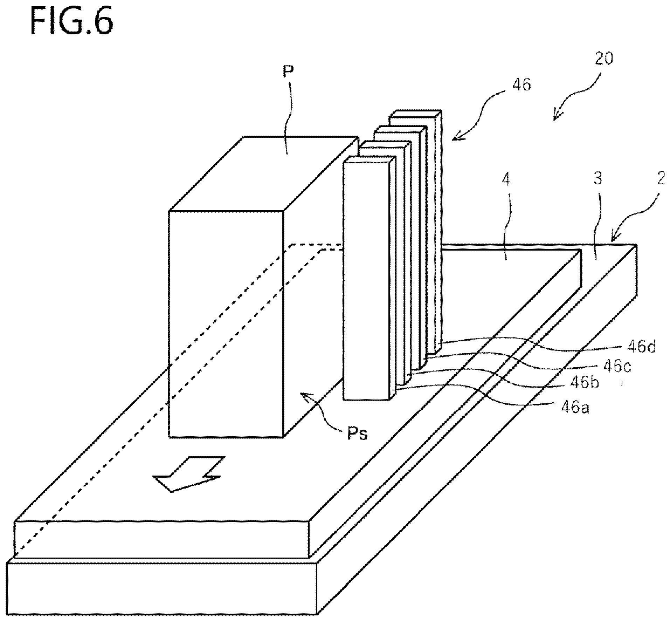

Next, the printing apparatus 20 will be described. The printing apparatus 20 of the present embodiment administers the printing process onto corrugated cardboard as the print medium. However, the printing apparatus 20 is not limited to such a configuration. Figure 6 illustrates the schematic configuration of the printing apparatus 20 of the present embodiment.

The printing apparatus 20 is equipped with a head unit 46 and a conveyance unit 2. The color detecting sensor 30 is omitted from Figure 6.

The conveyance unit 2 transports the print medium P in the direction of the arrow illustrated in Figure 6. The print medium P is a corrugated cardboard box, for example, with a print surface Ps that stands perpendicular to a conveyance surface, as illustrated in Figure 6.

The conveyance unit 2 has a support base 3 and a conveyor belt unit 4. The support base 3 is a base that supports the conveyor belt unit 4.

The conveyor belt unit 4 is equipped with two platen rollers and a conveyor belt, etc., that extend in a direction perpendicular to the conveyance direction of the print medium P. The two platen rollers are arranged in parallel, separated from each other in the conveyance direction of the print medium P. A circular conveyor belt is suspended between the two parallel platen rollers, and the platen rollers rotate to move the conveyor belt, thereby conveying the print medium P.

The head unit 46 administers printing by ejecting ink onto the print surface Ps of the print medium P which is conveyed by the conveyance unit 2.

The head unit 46 has four line heads 46a, 46b, 46c, and 46d as illustrated in Figure 6. The four line heads 46a through 46d are a plurality of inkjet heads arranged vertically and parallel with respect to the conveyance direction of the print medium P.

The four line heads 46a through 46d eject C (cyan), M (magenta), Y (yellow), and K (black) ink, respectively.

As the print medium P is conveyed by the conveyance unit 2, ink is sequentially ejected in the horizontal direction from each of the line heads 46a through 46d, and the printing process is administered thereby.

The color detecting sensor 30 is installed upstream from the head unit 46 in the conveyance direction, detects the color of the print surface Ps of the print medium P before the printing process, and outputs the detection result to the image processing apparatus 10.

According to the printing system 1 of the above embodiment, the types of objects included in the image data are classified, and an image process is administered on the image data according to the classified object type and the color information of the print medium on which the image data is to be printed. This enables the visibility of the various objects which are included in the image data to be improved in the case that the image data is printed on a print medium.

In addition, in the printing system 1 of the above embodiment, in the case that the type of object is a logo, the border process is administered on the object, such that the visibility of the logo can be improved without changing the color and shape of the logo as much as possible.

Further, in the printing system 1 of the above embodiment, the color of the border is determined based on the color information of colors which are included in the logo and the color information of the print medium, which can further improve the visibility of the logo.

Still further, in the printing system 1 of the above embodiment, in the case that the type of object is open text, the color conversion process is administered on the image data based on the color information of the print medium, the open text, and the background of the open text. Therefore, the visibility of the open text can be improved without causing a sense of incongruity from the original image data.

In addition, in the printing system 1 of the above embodiment, in the case that the type of object is a photograph, the contrast increasing process that increases contrast is administered on the image data. Therefore, the visibility of the object can be improved.

In the printing system 1 of the above embodiment, in the case that the visibility of print image data for judging visibility is judged to be poor and the type of object included in the image data is a photograph, the contrast increasing process is administered on the image data. However, there are cases in which there is no particular sense of incongruity even if the visibility of image data is judged to be poor, depending on the content of the objects which are included in the image data.

For example, in the case of ISO/JIS-SCID N3 fruit images, there is no sense of incongruity for bananas and lemons even if their colors change, due to the characteristic shapes thereof. In the case of bananas and lemons, there is little contrast difference within these objects due to their overall yellow color. Even if the yellow color changes slightly after bring printed on yellow corrugated cardboard, they will not be misidentified as other objects. In the case of bananas, for example, there are cucumbers and other similarly shaped objects, but because the tints of these objects are different to begin with, they will not be misidentified as "apricots" and "peaches" may be.

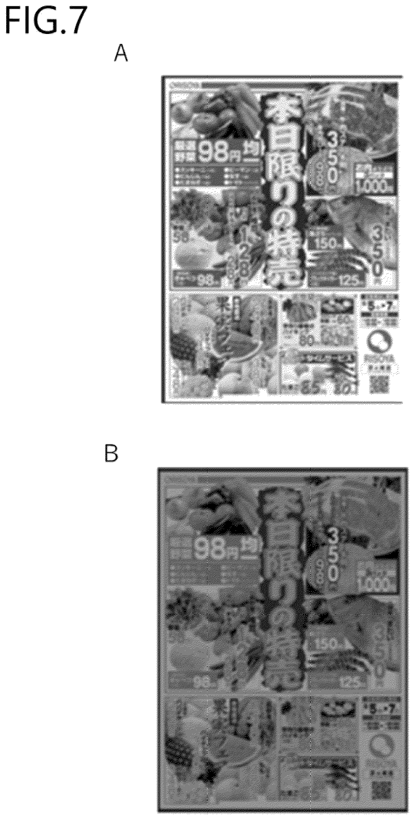

Figure 7B illustrates the result of printing the image data of the photograph of a flyer for a supermarket illustrated in Figure 7A on corrugated cardboard having a yellowish color. As illustrated in Figure 7B, there is no sense of incongruity that accompanies color changes for meat, fish, green vegetables, and watermelon. That is, there are cases in which a sense of incongruity do not arise even if the colors of objects are changed, depending on the contents of the objects.

Therefore, the contents of objects which are included in image data may be estimated, and the contents of objects which are included in print image data for judging visibility that represent a printing result when the image data is printed on a print medium may be estimated. In the case that the contents of the objects which are included in the image data do not match the contents of the objects which are included in the print image data for judging visibility, the contrast increasing process described above, a monochromatizing process, and an illustration process may further be administered.

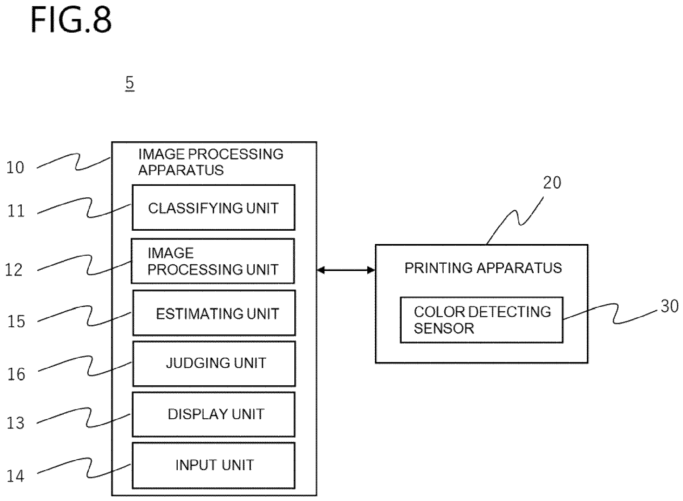

Figure 8 is a block diagram that illustrates the schematic configuration of a printing system 5 of a second embodiment that realizes the processes described above. The printing system 5 of the second embodiment is equipped with an estimating unit 15 and a judging unit 16 in addition to the components of the printing system 1 of the first embodiment.

The estimating unit 15 estimates the contents of objects which are included in image data and are included in print image data for judging visibility as described above. The estimating unit 15 recognizes the contents of objects by object recognition using machine learned models, for example. A convolutional neural network (CNN) may be employed as a machine learning method, for example. However, the present invention is not limited to such a configuration, and any other known method may be employed.

The image data to be input to the machine learned model may be original image data or image data that has been color converted from the original image data for a print medium (the original image data from which the color information of the print medium has been subtracted, for example).

The judging unit 16 judges whether the contents of objects which are included in the image data match the contents of objects which are included in the print image data for judging visibility, based on the contents of objects which are estimated by the estimating unit 15. Thereby, the judging unit 16 judges whether he contents of the objects which are included in the print image data for judging visibility may be misidentified.

The method of estimating the contents of objects which are included in the print image data for judging visibility and the method of judging whether the estimated contents of the objects may be misrecognized are not limited to the examples above. Tables or the like may be employed instead of using a machine learned model, for example.

Specifically, feature quantities of object shapes and color information which may be included in image data are stored in advance as a table, etc., for example. Known features such as areas, peripheral lengths, maximum lengths, complexities, and moments may be employed as the feature quantities of shapes. Lab values and CMYK values may be used as the color information, for example.

Then, an edge detecting process, etc., is administered on the print image data for judging visibility to extract the contour of an object. The feature quantity of the shape is obtained based on the contour of the object, and the color information within the contour is obtained. Then, the content of the object is estimated based on the obtained feature quantity of the shape and the obtained color information by referring to the above table. Next, by judging whether the content of the estimated object matches the content of the object which is included in the image data, it is determined whether misidentification of the object will occur. The contents of the objects which are included in the image data may be estimated using the above table in the same manner as for the print image data for judging visibility. Alternatively, a user may input the contents of the objects as settings employing the input unit 14.

The image processing unit 12 administers an image conversion process on the image data in the case that the judging unit 16 determines that the contents of the objects in the print image data for judging visibility will be misidentified.

The image processing unit 12 administers the monochromatizing process and the illustration process as the image conversion processes, in addition to the contrast increasing process described above. The monochromatizing process is a process that monochromatizes photographic image data. The monochromatizing process generates a monochrome image by converting the image data into a grayscale image, for example. The illustration process, for example, generates a black and white image in which gradations in the image data are binarized.

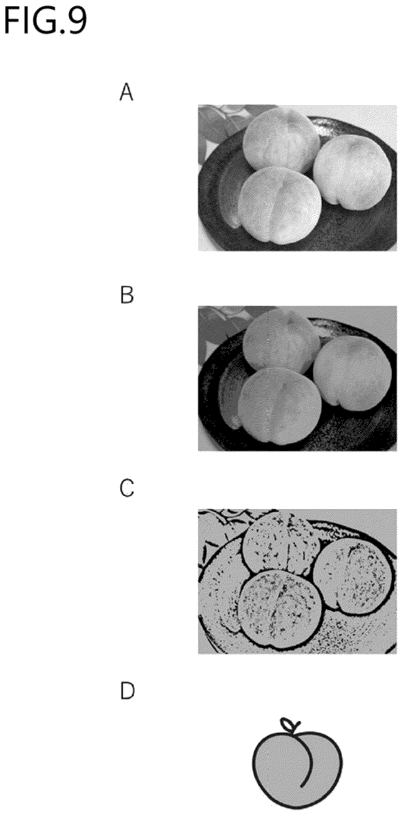

Figure 9A is a diagram that illustrates image data that includes a photograph of a peach as an object. Figure 9B is a diagram that illustrates the result of administering a grayscale process as the monochromatizing process on the image data illustrated in Figure 9A. Figure 9C is a diagram that illustrates the result of administering the gradation binarizing process as the illustration process on the image data illustrated in Figure 9A. As for the illustration process, as illustrated in Figure 9D, the content of the object (peach) may be abstractly represented as an illustration (abstraction process). This is because the contrast of the peach can be emphasized by the illustration process. The monochromatizing process also removes the similarity between the tint of a peach and the tint of an apricot in the case that the peach is printed on yellow corrugated cardboard, because it emphasizes the contrast of the peach, although not as much as the illustration process.

Note that the range in which the contrast increasing process, the monochromatizing process, and the illustration process are administered may be the entirety of the image data. Alternatively, these processes may be administered only on the range of an object such as a peach.

In addition, in the case that a plurality of objects are included in image data, as in the image data illustrated in Figure 7A, the contrast increasing process, the monochromatizing process, and the illustration process may be administered only to those objects the content of which are judged to not match by the judging unit 16.

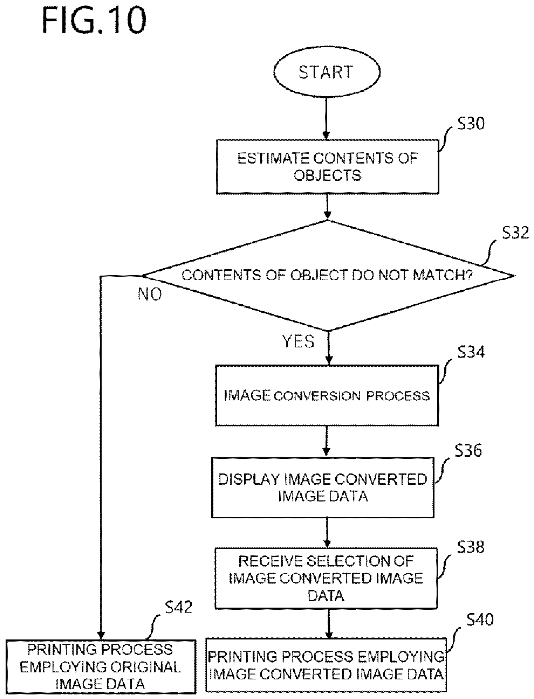

Next, the flow of processes performed by the printing system 5 of the second embodiment will be described with reference to the flowchart illustrated in Figure 10. Note that because the steps of the process up to the determination of object type are the same as those of the printing system 1 of the first embodiment, the steps of the process following these steps will be described.

First, the estimating unit 15 estimates the contents of objects in the image data and the contents of objects in the print image data for judging visibility (S30).

Next, the judging unit 16 judges whether the contents of the objects in the image data match the contents of the objects in the print image data for judging visibility, based on the contents of the objects estimated by the estimating unit 15 (S32).

In the case that the contents of objects in the image data and the contents of objects in the print image data for judging visibility match (S32, NO), the judging unit 16 judges that printing the image data on the print medium will not cause misidentification of the contents of objects, and a printing process is performed employing the original image data (S42).

In contrast, in the case that the contents of objects in the image data do not match the contents of objects in the print image data for judging visibility (S32, YES), the judging unit 16 judges that misidentification of the contents of objects will occur in the case that the image data is printed on a print medium. Then, the image processing unit 12 administers the contrast increasing process, the monochromatizing process and the illustration process on the image data as image conversion processes (S34).

Thereafter, the display unit 13 displays printing results for cases in which the original image data, the image data to which the contrast increasing process has been administered, the image data to which the monochromatizing process has been administered, and the image data to which the illustration process has been administered are printed on the print medium, respectively (S36).

Next, the input unit 14 accepts selection of the image data to be finally printed from among the original image data, the image data to which the contrast increasing process has been administered, the image data to which the monochromatizing process has been administered, and the image data to which the illustration process has been administered from a user (S38).

The printing process is then performed by the printing apparatus 20 employing the image data selected by the user (S40).

Note that in the printing system 2 of the above embodiment, the image conversion process is administered on the original image data. Alternatively, the image conversion process may be administered on the print image data for judging visibility.

According to the printing system 5 of the second embodiment above, the contents of objects which are included in the print image data for judging visibility are estimated, and in the case that it is judged that the contents of the estimated objects will be misidentified, the image conversion process is administered on the image data. Therefore, it becomes possible to prevent misidentification of objects which are included in the image data in the case that the image data is printed on a print medium.

In addition, in the printing system 5 of the above embodiment, the contents of objects which are included in image data are estimated, whether the contents of objects estimated based on the image data match the content of objects estimated based on the print image data for judging visibility is judged, and in the case that it is judged that they do not match, the image conversion process is administered on the image data. Therefore, a burden on a user for setting and inputting the contents of the objects in the image data can be eliminated.

Further, in the printing system 5 of the above embodiment is provided with the color detecting sensor 30 that detects the color information of the print medium, and the print image data for judging visibility is generated based on the color information of the print medium detected by the color detecting sensor 30. Therefore, a burden on a user for setting and inputting the color information of the print medium can be eliminated.

Still further, in the printing system 5 of the above embodiment, in the case that at least one of the monochromatizing process and the illustration processes is administered as the image conversion process, the contrast of the object can be made higher and the characteristics of the object can be emphasized to a greater degree. Therefore, misidentification of the contents of objects can be further suppressed.

Still yet further, in the printing system 5 of the above embodiment, a plurality of image conversion processed images are generated, and the system accepts the selection of an image conversion processed image to be printed from among the plurality of conversion-processed images. Therefore, a user can select and print an image conversion processed image that they consider to be appropriate.

. Note that the present invention is not limited to the above embodiments, and may be embodied by modifying the constituent elements to an extent that it does not depart from the spirit and scope thereof at the implementation stage. In addition, various inventions may be realized by appropriate combinations of the plurality of constituent elements disclosed in the above embodiments. For example, all of the constituent elements disclosed in the embodiments may be combined as appropriate. It is, of course, possible for various modifications and applications to be realized within a scope that does not depart from the spirit and the scope of the present invention.

The following items are further disclosed with respect to the present invention.

### (Item 1)

The image processing apparatus of the present invention is equipped with a classifying unit that acquires image data and classifies the types of objects which are included in the image data, and an image processing unit that administers an image process on the image data according to the types of objects classified by the classifying unit and color information of a print medium on which the image data is to be printed.

### (Item 2)

In the image processing apparatus disclosed in Item 1, in the case that the type of object is a logo, the image processing unit is capable of administering a border process to add a border to the object as the image process.

### (Item 3)

In the image processing apparatus disclosed in Item 1 or Item 2, the image processing unit is capable of determining the color of the border based on the color information of colors which are included in the logo and the color information of the print medium.

### (Item 4)

In the image processing apparatus disclosed in any one of Items 1 through 3, in the case that the type of object is open text, the image processing unit is capable of administering a color conversion process on the image data based on the color information of the print medium and the background of the open text as the image process.

### (Item 5)

In the image processing apparatus disclosed in any one of Items 1 through 4, in the case that the type of object is a photograph, the image processing unit is capable of administering a contrast increasing process, which increases contrast, on the image data as the image process.

### (Item 6)

An image processing method of the present invention obtains image data, classifies the types of objects which are included in the obtained image data, and administers an image process on the image data according to the classified types of objects and color information of the print medium on which the image data is to be printed.

### (Item 7)

An image processing program of the present invention causes a computer to execute a step of obtaining image data, a step of classifying the types of objects which are included in the obtained image data, and a step of administering an image process on the image data according to the classified types of objects and color information of the print medium on which the image data is to be printed.

### (Item 8)

An image processing apparatus of the present invention is equipped with an estimating unit that obtains image data to be printed on a print medium, generates print image data that represent the result of printing the image data or image data, which is color converted for the print medium, on the print medium, and estimates the contents of objects which are included in the print image data, a judging unit that judges whether misidentification of the contents of objects which were estimated by the estimating unit is occurring, and an image processing unit that administers an image conversion process on the image data in the case that the judging unit judges that misidentification of the contents of objects is occurring.

### (Item 9)

In the image processing apparatus disclosed in Item 8, the estimating unit estimates the contents of objects which are included in the image data, the judging unit judges whether the contents of the objects which are estimated based on the image data and the contents of the objects which are estimated based on the print image data match, and the image processing unit administers the image conversion process on the image data in the case that it is judged that the contents of the objects which are estimated based on the image data do not match the contents of the objects which are estimated based on the print image data.

### (Item 10)

In the image processing apparatus disclosed in Item 8 or Item 9, a color detecting unit detects color information of the print medium, and the estimating unit is capable of generating print image data based on the color information of the print medium detected by the color detecting unit.

### (Item 11)

In the image processing apparatus disclosed in any one of Items 8 through 10, the image processing unit is capable of administering at least one of a monochromatizing process and an illustration process as the image conversion process.

### (Item 12)

In the image processing apparatus disclosed in any one of Items 8 through 11, the image processing unit is capable of administering a plurality of image conversion processes to image data to generate a plurality of image conversion processed images, and the image processing apparatus is further equipped with a printing target image selection receiving unit that accepts selection of an image conversion processed image to be printed from among the plurality of image conversion processed images.

### (Item 13)

An image processing method of the present invention obtains image data to be printed on a print medium, generates print image data that represent the result of printing the image data or image data, which is color converted for the print medium, on the print medium, estimates the contents of objects which are included in the printed image data, judges whether misidentification of the estimated contents of objects is occurring, and administers an image conversion process to the image data in the case that it is judged that misidentification of the estimated contents of objects is occurring.

### (Item 14)

An image processing program of the present invention causes a computer to execute a step of obtaining image data to be printed on a print medium, a step of generating print image data that represent the result of printing the image data or image data, which is color converted for the print medium, on the print medium, a step of estimating the contents of objects which are included in the print image data, a step of judging whether the estimated contents of objects are being misidentified, and a step of administering an image conversion process on the image data in the case that it is judged that the contents of objects are being misidentified.

### [Explanation of the Reference Numerals]

- 1, 5: printing system
- 2: conveyance unit
- 3: support base
- 4: conveyor belt unit
- 10: image processing apparatus
- 11: classifying unit
- 12: image processing unit
- 13: display unit
- 14: input unit
- 15: estimating unit
- 16: judging unit
- 20: printing apparatus
- 30: color detecting sensor
- 46: head unit
- 46a~46d: line heads
- P: print medium
- Ps: print surface

## Claims

1. An image processing apparatus (10) comprising:
a classifying unit (11) that acquires image data and classifies the types of objects which are included in the image data; and
an image processing unit (12) that administers an image process on the image data according to the types of objects classified by the classifying unit (11) and color information of a print medium on which the image data is to be printed.

2. The image processing apparatus (10) according to Claim 1, wherein:
in the case that the type of object is a logo, the image processing unit (12) administers a border process to add a border to the object as the image process.

3. The image processing apparatus (10) according to Claim 1 or Claim 2, wherein:
the image processing unit (12) determines the color of the border based on the color information of colors which are included in the logo and the color information of the print medium.

4. The image processing apparatus (10) according to any one of Claims 1 through 3, wherein:
in the case that the type of object is open text, the image processing unit (12) administers a color conversion process on the image data based on the color information of the print medium and the background of the open text as the image process.

5. The image processing apparatus (10) according to any one of Claims 1 through 4, wherein:
in the case that the type of object is a photograph, the image processing unit (12) administers a contrast increasing process, which increases contrast, on the image data as the image process.

6. An image processing method comprising:
obtaining image data;
classifying the types of objects which are included in the obtained image data; and
administering an image process on the image data according to the classified types of objects and color information of the print medium on which the image data is to be printed.

7. An image processing program that causes a computer to execute:
a step of obtaining image data;
a step of classifying the types of objects which are included in the obtained image data; and
a step of administering an image process on the image data according to the classified types of objects and color information of the print medium on which the image data is to be printed.

8. The image processing apparatus (10) according to Claim 1, further comprising:
an estimating unit (15) that generates print image data that represent the result of printing the image data or image data, which is color converted for the print medium, on the print medium, and estimates the contents of objects which are included in the print image data;
a judging unit (16) that judges whether misidentification of the contents of objects which were estimated by the estimating unit (15) is occurring; and
an image processing unit (12) that administers an image conversion process on the image data in the case that the judging unit (16) judges that misidentification of the contents of objects is occurring.

9. The image processing apparatus (10) according to Claim 8, wherein:
the estimating unit (15) estimates the contents of objects which are included in the image data;
the judging unit (16) judges whether the contents of the objects which are estimated based on the image data and the contents of the objects which are estimated based on the print image data match; and
the image processing unit (12) administers the image conversion process on the image data in the case that it is judged that the contents of the objects which are estimated based on the image data do not match the contents of the objects which are estimated based on the print image data.

10. The image processing apparatus (10) according to Claim 8 or Claim 9, wherein:
a color detecting unit (30) detects color information of the print medium; and
the estimating unit (15) generates print image data based on the color information of the print medium detected by the color detecting unit (30).

11. The image processing apparatus (10) according to any one of Claims 8 through 10, wherein:
the image processing unit (12) administers at least one of a monochromatizing process and an illustration process as the image conversion process.

12. The image processing apparatus (10) according to any one of Claims 8 through 11, wherein:
the image processing unit (12) administers a plurality of image conversion processes to image data to generate a plurality of image conversion processed images; and
the image processing apparatus (10) further comprises:
a printing target image selection receiving unit that accepts selection of an image conversion processed image to be printed from among the plurality of image conversion processed images.

13. The image processing method according to Claim 6, further comprising:
generating print image data that represent the result of printing the image data or image data, which is color converted for the print medium, on the print medium;
estimating the contents of objects which are included in the printed image data;
judging whether misidentification of the estimated contents of objects is occurring; and
administering an image conversion process to the image data in the case that it is judged that misidentification of the estimated contents of objects is occurring.

14. The image processing program according to Claim 7 that causes a computer to further execute:
a step of generating print image data that represent the result of printing the image data or image data, which is color converted for the print medium, on the print medium;
a step of estimating the contents of objects which are included in the print image data, a step of judging whether the estimated contents of objects are being misidentified; and
a step of administering an image conversion process on the image data in the case that it is judged that the contents of objects are being misidentified.
